# EUROPEAN PATENT SPECIFICATION

(11) **EP 0 999 158 B1**
(45) Date of publication and mention of the grant of the patent: **29.12.2004**
(21) Application number: 99120890.1
(22) Date of filing: 28.10.1999
(51) Int. Cl.: B65G 65/00, B65G 49/08

(54) **Modular station for the automated loading and unloading of ceramic products and the like**
Modulare Station zum automatischen Laden und Entladen von Gegenständen aus Keramik
Station modulaire pour charger et décharger automatiquement des pièces en céramiques

(30) Priority: 02.11.1998 IT MO980228
(43) Date of publication of application: 10.05.2000
(73) Proprietor: GRUPPO BARBIERI & TAROZZI S.r.l., 41043 Formigine (Modena) (IT)
(72) Inventor: Tarozzi, Fausto, 20145 Milano (IT)
(74) Representative: Burrows, Anthony Gregory

(56) References cited:
- EP-A- 0 301 231
- EP-A- 0 445 695
- DE-A- 3 320 737
- DE-A- 3 504 365
- DATABASE WPI Derwent Publications Ltd., London, GB; AN 1999-027484 XP002130683 (BERBIERI & TAOZZI SRL), 18 December 1997 (1997-12-18) & IT 1 279 799 A (GRUPPO BARBIERI & TAROZZI SRL) 18 December 1997 (1997-12-18)

## Description

The present invention relates to a modular station for the automated loading and unloading of ceramic products and the like.

Automatic handling of products of different kinds and more specifically of ceramic tiles has long employed systems essentially composed of a machine assigned to the actual loading and unloading of a so-called box, i.e. a grid-like structure which is shaped like a parallelepiped and is composed of two sides between which multiple freely rotating rollers are supported; the rollers form a plurality of stacked horizontal supporting surfaces on which the products are loaded or from which they are unloaded.

In practice, the machine is provided with one or two horizontal and cantilevered arms which support motorization elements which, when the box is placed in the work area, known as apron in the jargon, are adapted to alternately engage the ends of the rollers that constitute each supporting surface, motorizing them and producing a sort of a plurality of alternately movable belts which receive or expel the products, which in the specific case are ceramic tiles.

Since the boxes have, as a whole, several supporting surfaces in order to offer an adequate storage capacity, loading and unloading operations require a significant amount of time; accordingly, in order to optimize production cycles it is necessary to minimize the downtimes that occur every time the boxes are changed at the apron.

For this purpose, loading and unloading machines have been equipped so that they can operate continuously even on two boxes at a time and according to technical solutions described hereinafter in order to be able to move the products in the horizontal direction "x" and in the vertical direction "z".

In a first solution, the machine is composed of a frame which supports two aligned parallel arms which protrude on opposite sides and between which there is a roller conveyor for continuous connection to the production lines; the arms, together with the roller conveyor, can move vertically in order to progressively arrange themselves at all the levels of the supporting surfaces of the boxes; the axes of the rollers of the boxes are perpendicular to the platform which is fixed on the floor and it is therefore necessary to provide a lifting unit with narrow parallel belts which, by moving alternately above the supporting surface of the roller conveyor or retracting below it, connects the roller conveyor so as to match the direction of the motion of the rollers of the boxes placed at the apron; in this manner, the roller conveyor can receive or deliver rows of products to be sent, or in turn received, from a platform which is fixed on the floor and is also composed of a supporting surface formed by parallel and horizontal rollers which functionally connects the machine to a general product conveyance line.

In a second solution, the loading and unloading machine is composed of a very wide portal-shaped frame and is provided with two working arms, i.e. arms provided with the motorization elements adapted to engage the corresponding ends of the rollers of the boxes; the arms can slide on the uprights of the portal and the useful gap between them is in turn divided along the centerline by a wall, also vertical, provided with complementary means for engaging the remaining ends of the rollers of both boxes arranged at the apron.

Downstream of the machine there is also a flat motorized roller conveyor which has the same loading surface area as each roller-fitted supporting surface of the boxes and moves vertically on its own portal-shaped frame, which in turn moves monolithically and horizontally between the two boxes arranged side by side on adapted guides provided on the floor.

Downstream of the movable roller conveyor, two fixed platforms are arranged on the floor and necessarily in a mirror-symmetrical manner; as above-mentioned, their supporting surfaces are similarly constituted by flat roller conveyors which also necessarily have the same plan shape as each supporting surface of the boxes in order to receive the complete set of tiles meant for the subsequent treatment steps; in this case, the arrangement of the rollers of the boxes, of the roller conveyor and of the platforms is the same, but the roller conveyor moves in a single direction, namely the vertical "z" axis, with respect to its own supporting frame, which in turn moves monolithically, as above-mentioned, on the floor surface in order to align the roller conveyor each time with the next box to be loaded or unloaded.

Finally, in a third, more simplified solution the boxes are arranged at the apron sequentially but strictly one at a time: in order to position them so that the rollers are arranged in the same direction as those of the conventional connecting roller conveyor, which in this case can move only along the "z" axis, with the equally conventional floor-level platform to which a product conveyance line leads, so as to create a path for queuing multiple boxes in addition to the one located at the apron and therefore ensure continuous feeding of the boxes both upstream and downstream, it is necessary to make the boxes move along an idle path.

All the known solutions have several problems due essentially to their considerable overall dimensions, which derive from, and are necessarily dependent on, the plan arrangement and the structure of the components; moreover, the complexity of the embodiments, especially as regards the provision of the handling of the products along the "x" and "z" directions, make known systems inflexible and therefore unacceptable for small-medium firms which do not have the space required for their placement.

Finally, the operation of conventional systems uses inherently complicated and articulated structures which accordingly have a considerable weight, forcing to reduce the operating transfer speeds and increasing direct manufacturing costs and management costs, which are also burdened by a consequently limited overall efficiency coefficient.

The technical aim of the present invention is to solve the above-noted problems of the prior art by providing a modular station for the automated loading and unloading of ceramic products and the like which has a substantially simplified structure, is adequately flexible in adapting to the different system requirements and allows to work at substantially higher speeds than conventional systems.

This aim, this object and others are achieved by a modular station for the automated loading and unloading of ceramic products and the like, comprising a machine provided with at least one movable arm which is guided vertically on a frame and is provided with means for the alternated motorization of the heads of the rollers of each supporting surface of two boxes arranged in a work area of the machine, technically known as apron, a flat roller conveyor for spatial connection between the supporting surfaces of the boxes and a conventional floor-level platform for exchanging the products with a conventional conveyance line, characterized in that the rollers of the roller conveyor and of the floor-level platform are strictly parallel to each other and to the rollers of the boxes in plan view and the roller conveyor can move on a fixed frame at least along a horizontal axis and a vertical axis.

Further characteristics and advantages will become apparent from the following description of a preferred embodiment of a modular station for the automated loading and unloading of ceramic products and the like, illustrated only thanks to a non-limitative example in the accompanying drawings, wherein:
Figure 1 is a plan view of the modular station according to the invention, in a first possible embodiment;

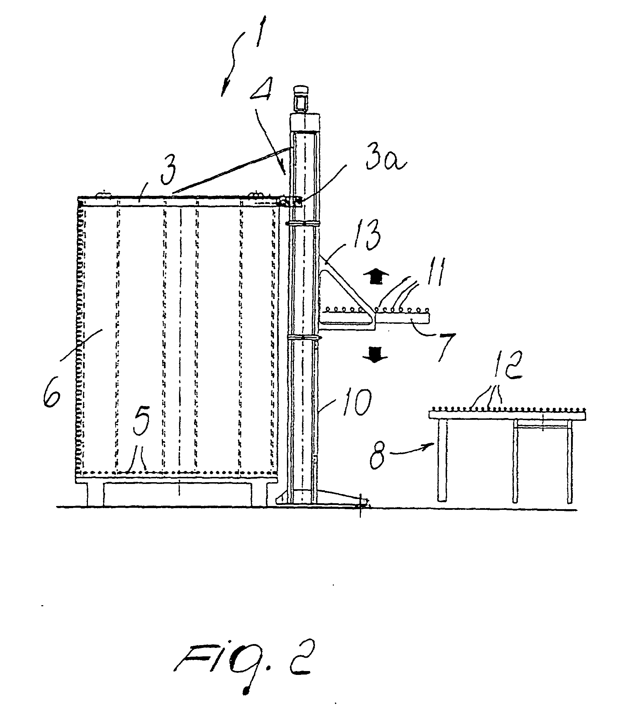

Figure 2 is a corresponding side view thereof;
Figure 3 is another plan view of the modular station according to the invention in a second further possible embodiment;
Figure 4 is a plan view of the modular station according to the invention in a third possible embodiment.

With reference to the above-cited figures, the numeral 1 designates a modular station for the automated loading and unloading of ceramic products and the like, constituted by tiles in the specific case, which comprises a machine 2 which has one or more movable arms 3 which are guided vertically on an adapted frame 4.

Each arm 3 is provided with elements 3a (shown schematically for the sake of simplicity) for alternately motorizing the heads of the rollers 5 of each supporting surface of a pair of boxes 6 which are in each instance placed in a work area of the machine 2 which is technically known as apron.

The machine 2 is also equipped with a flat roller conveyor 7 which is adapted to spatially connect the supporting surfaces of the boxes 6 to a conventional floor-level platform 8 for exchanging products with a conventional line 9 for conveying the products and can move on its own frame 10 which is fixed to the floor.

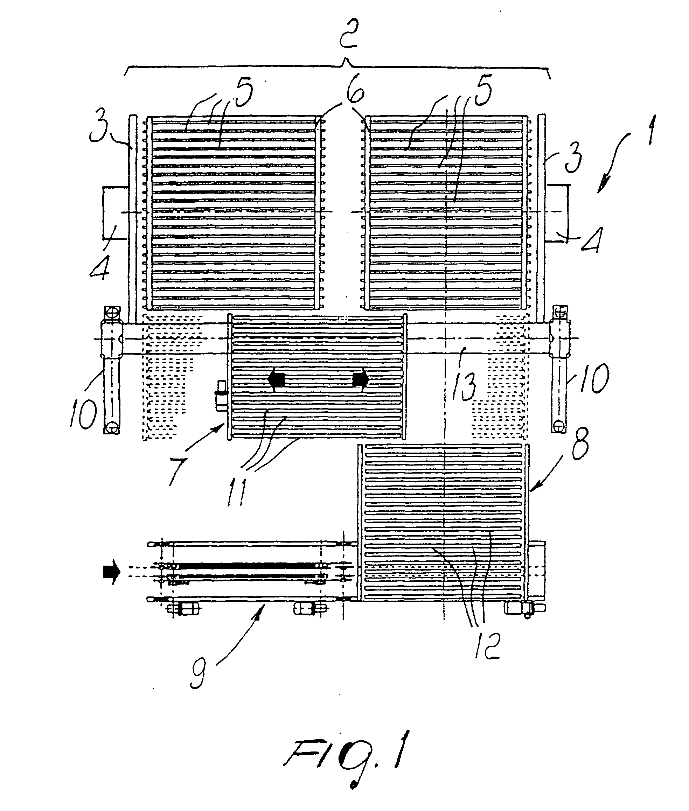

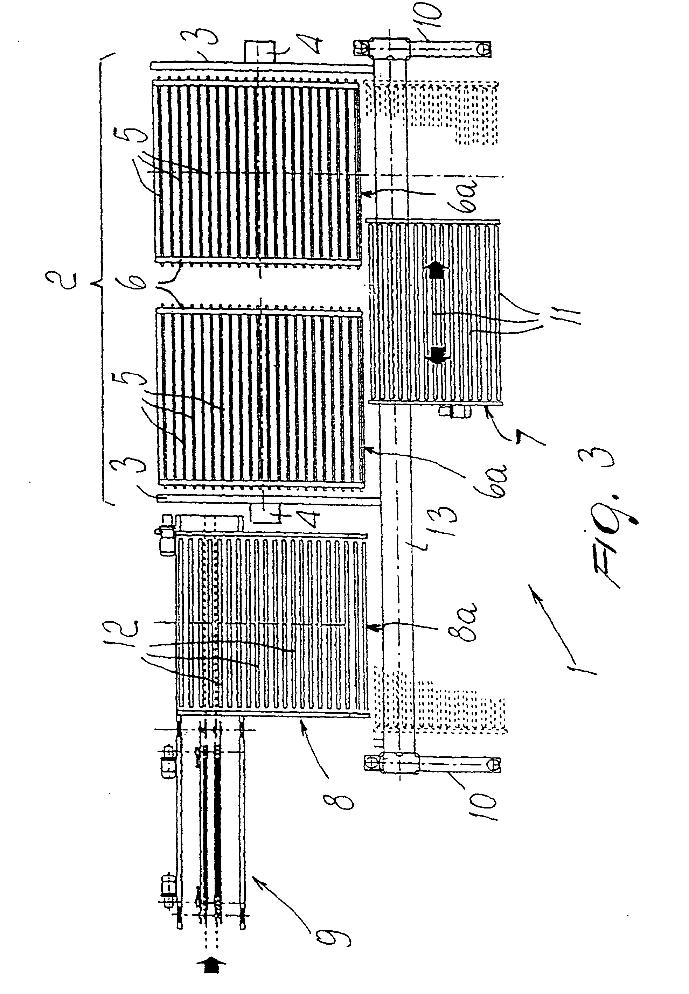

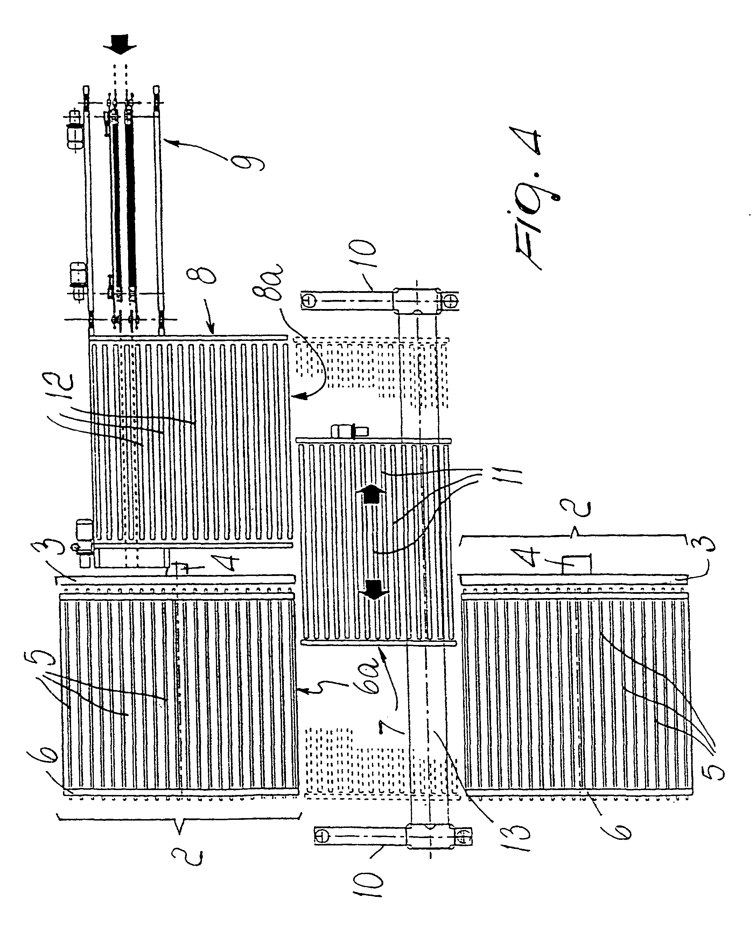

As shown in Figures 1, 3 and 4, in the modular station 1 the rollers 11 of the roller conveyor 7 and 12 of the floor-level platform 8 are, in plan view, always strictly parallel to each other and to the rollers 5 of the boxes 6.

The roller conveyor 7 can further move on an adapted fixed frame 10 at least along a horizontal axis "x" and a vertical axis "z".

This arrangement of the rollers 5, 11 and 12 allows direct transfers of products between supporting surfaces of the boxes 6 and of the roller conveyor 7 and between the roller conveyor 7 and the floor-level platform 8 (and vice versa) to occur along strictly straight paths.

Moreover, this allows to freely arrange the floor-level platform 8 in selected positions which are not necessarily in alignment with the median transverse axes of the rollers 5 of the boxes; the platform can in fact be arranged both directly downstream of the roller conveyor 7 and to the side of one of the boxes 6, so that its entry/exit front 8a is aligned with the exit/entry fronts 6a of the boxes 6, respectively.

Each one of the arms 3 can move vertically on the guided movement frame 4; this movement occurs independently of the movement of the roller conveyor 7.

Each arm 3 further protrudes on opposite sides of the roller conveyor 7 relative to the movement, guiding frame 4 and the fixed frame 10.

The latter frame is portal-shaped, and a carriage 13 can slide vertically on the uprights, supporting the roller conveyor 7, which can in turn be moved in a horizontal direction and is indeed guided on the carriage 13 so that it can perform with it bidirectional movements along the "x" and "z" axes.

In practice, the combination provided by the station 1, which consists of the strictly parallel arrangement of the rollers 5, 11 and 12 combined with the possibility to move the roller conveyor 7 in the two directions "x" and "z", allows the position of the floor-level platform 8 to be independent; this allows to adapt, from the systems viewpoint, the arrangement of the components of the modular station 1 to any requirement; moreover, the axial distance produced by the adjacent arrangement of multiple modular stations 1 arranged along a common transfer line for boxes 6 is greatly reduced with respect to what can be achieved by arranging known stations side by side.

It has thus been observed that the above-described invention achieves the intended aim and objects.

The invention thus conceived is susceptible of several modifications and variations, all of which are within the scope of the inventive concept.

All the details may furthermore be replaced with other technically equivalent elements.

In the practical embodiment of the invention, the materials employed, the shapes and the dimensions may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A modular station for the automated loading and unloading of ceramic products and the like, comprising a machine (2) provided with at least one movable arm (3) which is guided vertically on a guiding frame (4) and is provided with means (3a) for the alternated motorization of the heads of the rollers of each supporting surface of two boxes (6) arranged in a work area of the machine, technically known as apron, a flat roller conveyor (7) for spatial connection between the supporting surfaces of the boxes (6) and a conventional floor-level platform (8) for exchanging the products with a conventional conveyance line (9), **characterized in that** the rollers (11, 12) of said roller conveyor (7) and of said floor-level platform (8) are strictly parallel to each other and to the rollers (5) of the boxes (6) in plan view and said roller conveyor (7) can move on a fixed frame (10) at least along a horizontal axis and a vertical axis.

2. A modular station according to claim 1, **characterized in that** the direct transfers of products between supporting surfaces of the boxes (6) and said roller conveyor (7), between said roller conveyor (7) and said floor-level platform (8) and vice versa occur along strictly straight paths.

3. A modular station according to the preceding claims, **characterized in that** said floor-level platform (8) is arrangeable in any selected position independently of the alignment with the median transverse axes of the rollers (5) of the boxes.

4. A modular structure according to the preceding claims, **characterized in that** said floor-level platform (8) can be arranged laterally adjacent to said boxes (6) so that the entry/exit front (8a) is aligned respectively with the exit/entry fronts (6a) of said boxes (6).

5. A modular station according to claim 1, **characterized in that** said arm (3) can move vertically on said guiding frame (4) independently of said roller conveyor (7).

6. A modular station according to claim 5, **characterized in that** said arm (3) protrudes on the opposite side of said roller conveyor (7) relative to said guiding frame (4) and said fixed frame (10).

7. A modular station according to claim 1, **characterized in that** said fixed frame (10) is portal-shaped, a carriage (13) for supporting said roller conveyor (7) sliding vertically on its uprights.

8. A modular station according to claim 7, **characterized in that** said roller conveyor (7) can be moved horizontally and so as to be guided on said carriage (13).

## Patentansprüche

1. Modulare Station zum automatischen Laden und Entladen keramischer Produkte und Ähnlichem, die eine Maschine (2), die mit zumindest einem beweglichen Arm (3) versehen ist, der vertikal an einem Führungsrahmen (4) geführt ist, und die mit Mitteln (3a) für eine alternierende Motorisierung der Köpfe der Rollen jeder Trägerfläche von zwei Kisten (6) versehen ist, die in einem Arbeitsbereich der Maschine angeordnet sind, der technisch als Abstellfläche bekannt ist, und einen flachen Rollenförderer (7) zum räumlichen Verbinden zwischen den Trägerflächen der Kisten (6) und einer herkömmlichen, auf Bodenniveau angeordneten Plattform (8) zum Austauschen der Produkte mit einem herkömmlichen Förderband (9) aufweist, **dadurch gekennzeichnet, dass** die Rollen (11, 12) des Rollenförderers (7) und der auf Bodenniveau angeordneten Plattform (8) zueinander und zu den Rollen (5) der Kisten (6) in einer Draufsicht streng parallel angeordnet sind, und dass sich der Rollenförderer (7) auf einem festen Rahmen (10) zumindest entlang einer horizontalen Achse und einer vertikalen Achse bewegen kann.

2. Modulare Station nach Anspruch 1, **dadurch gekennzeichnet, dass** die direkten Produktumsetzungen zwischen Trägerflächen der Kisten (6) und dem Rollenförderer (7), zwischen dem Rollenförderer (7) und der auf Bodenniveau angeordneten Plattform (8), und umgekehrt, sich entlang streng geraden Wegen ereignet.

3. Modulare Station nach den vorangegangenen Ansprüchen, **dadurch gekennzeichnet, dass** die auf Bödenniveau angeordnete Plattform (8) in einer beliebig ausgewählten Position unabhängig von der Ausrichtung mit den mittleren Querachsen der Rollen (5) der Kisten anordenbar ist.

4. Modulare Struktur nach den vorangegangenen Ansprüchen, **dadurch gekennzeichnet, dass** die auf Bodenniveau angeordnete Plattform (8) seitlich angrenzend zu den Kisten (6) angeordnet werden kann, so dass die Eingangs-/Ausgangsfront (8a) jeweils mit den Eingangs-/Ausgangsfronten (6a) der Kisten (6) ausgerichtet ist.

5. Modulare Station nach Anspruch 1, **dadurch gekennzeichnet, dass** der Arm (3) vertikal an dem Führungsrahmen (4), unabhängig von dem Rollenförderer (7) bewegt werden kann.

6. Modulare Station nach Anspruch 5, **dadurch gekennzeichnet, dass** der Arm (3) auf der dem Rollenförderer (7) gegenüberliegenden Seite relativ zu dem Führungsrahmen (4) und dem festen Rahmen (10) vorsteht.

7. Modulare Station nach Anspruch 1, **dadurch gekennzeichnet, dass** der feste Rahmen (10) portalförmig ist, wobei ein Schlitten (13) zum Halten des Rollenförderers (7) vertikal auf dessen Pfosten gleitet.

8. Modulare Station nach Anspruch 7, **dadurch gekennzeichnet, dass** der Rollenförderer (7) horizontal bewegt werden kann, um so auf dem Schlitten (13) geführt zu werden.

## Revendications

1. Poste modulaire pour le chargement et le déchargement automatisés de produits en céramique et similaires, comprenant une machine (2) munie d'au moins un bras mobile (3) qui est guidé verticalement sur une ossature de guidage (4) et qui est muni de moyens (3a) pour la motorisation alternée des têtes des galets de chaque surface portante de deux caissons (6) disposés dans une zone de travail de la machine, techniquement connue sous le terme de "tablier", un transporteur (7) plat à rouleaux destiné à une connexion spatiale entre les surfaces de support des caissons (6) et une plate-forme (8) conventionnelle au niveau du sol pour échanger les produits avec une ligne de transport conventionnelle (9), ***caractérisé en ce que*** les rouleaux (11, 12) dudit transporteur (7) à rouleaux et de ladite plate-forme (8) au niveau du sol sont strictement parallèles les uns aux autres et aux rouleaux (5) des caissons (6) selon une vue en plan, et ledit transporteur (7) à rouleaux peut se déplacer sur un châssis fixe (10) au moins sur un axe horizontal et sur un axe vertical.

2. Poste modulaire selon la revendication 1, ***caractérisé en ce que*** les transferts directs de produits entre les surfaces de support des caissons (6) et ledit transporteur (7) à rouleaux, entre ledit transporteur à rouleaux (7) et ladite plate-forme (8) au niveau du sol, et vice versa, se produit le long de trajets strictement rectilignes.

3. Poste modulaire selon les revendications précédentes, ***caractérisé en ce que*** ladite plate-forme (8) au niveau du sol est agençable dans toute position choisie, indépendamment de l'alignement des axes médians transversaux des rouleaux (5) des caissons.

4. Structure modulaire selon les revendications précédentes, ***caractérisée en ce que*** ladite plate-forme (8) au niveau du sol peut être disposée latéralement adjacente auxdits caissons (6) de telle sorte que la face avant (8a) d'entrée/sortie soit alignée respectivement avec les faces avant (6a) d'entrée/sortie desdits caissons (6).

5. Poste modulaire selon la revendication 1, ***caractérisé en ce que*** ledit bras (3) peut se déplacer verticalement sur ladite ossature (4) de guidage indépendamment dudit transporteur (7) à rouleaux.

6. Poste modulaire selon la revendication 5, ***caractérisé en ce que*** ledit bras (3) saille sur le côté opposé dudit transporteur (7) à rouleaux par rapport à ladite ossature (4) de guidage et audit châssis fixe (10).

7. Poste modulaire selon la revendication 1, ***caractérisé en ce que*** ledit châssis fixe (10) est en forme de portique, un chariot (13) destiné à supporter ledit transporteur (7) à rouleaux coulissant verticalement sur ses montants.

8. Poste modulaire selon la revendication 7, ***caractérisé en ce que*** ledit transporteur (7) à rouleaux peut être déplacé horizontalement et de manière à être guidé sur ledit chariot (13).
